# EUROPEAN PATENT SPECIFICATION

(11) **EP 0 892 396 B1**
(45) Date of publication and mention of the grant of the patent: **25.05.2005**
(21) Application number: 98112902.6
(22) Date of filing: 10.07.1998
(51) Int. Cl.: G11B 7/125, G11B 7/135, G11B 7/12

(54) **Hologram laser unit and two-focus type optical pickup**
Hologramm-Lasereinheit und optische Abtastvorrichtung mit zwei Brennweiten
Unité laser avec hologramme, et tête optique à deux foyers

(30) Priority: 14.07.1997 JP 18879697
(43) Date of publication of application: 20.01.1999
(73) Proprietor: Sharp Kabushiki Kaisha, Osaka-shi, Osaka 545-8522 (JP)
(72) Inventor: Sakai, Keiji, Nara-shi, Nara-ken (JP)
(74) Representative: Müller, Frithjof E., Dipl.-Ing.

(56) References cited:
- EP-A- 0 610 055
- EP-A- 0 745 983
- EP-A- 0 747 893
- EP-A- 0 802 529
- EP-A- 0 831 471
- JP-A- 9 245 364

## Description

### BACKGROUND OF THE INVENTION

### 1. FIELD OF THE INVENTION:

The present invention relates to a hologram laser unit mounted in an optical disk device for optically recording/reproducing information on/from an information recording medium such as an optical disk, and an optical pickup including the hologram laser unit as a light source. More particularly, the present invention relates to a two-focus type optical pickup capable of providing accurate information recording/reproduction for two types of optical disks having different substrate thicknesses and refractive indices, and a hologram laser unit used as a light source of the optical pickup.

### 2. DESCRIPTION OF THE RELATED ART:

In recent years, optical disks have been used or attempted to be used in many fields such as audio, video, and computer applications due to the feature thereof of being capable of recording a great amount of information signals at high density. Compact disks (CDs), video disks, mini-disks (MDs), and magnetooptical disks for computer, which are widely available in the market, commonly use substrates with the same thickness, i.e., 1.2 mm-thick substrates. An objective lens of an optical pickup is therefore designed so that an aberration generated by the 1.2 mm-thick substrate can be compensated for.

On the other hand, a variety of studies have been conducted to increase the recording capacity (recording area) of optical disks. These studies include increasing the numerical aperture (NA) of an objective lens to improve the optical resolution, and forming multiple recording layers.

As the NA of the objective lens increases, the diameter of a converged light beam decreases in proportion to the NA, but the allowance of the tilt of a disk decreases in proportion to the cube of the NA. In order to prevent the allowance of the disk tilt (disk tilt allowance) from decreasing as the NA of the objective lens increases, the thickness of the substrate of the disk must be decreased. For example, a disk tilt allowance substantially equal to that obtained when the NA of the objective lens is 0.5 and the substrate thickness is 1.2 mm is obtained when the NA of the objective lens is about 0.6 and the substrate thickness is about 0.6 mm. However, a disk having such a thin substrate is no longer compatible with optical disks with the conventional substrate thickness.

A multilayer disk where a plurality of recording layers are formed with a transparent substrate with a certain thickness interposed therebetween can provide a greatly increased recording capacity. In such a multilayer disk, however, the substantial substrate thickness as is seen from an objective lens is different for the respective recording layers. Therefore, correct information recording/reproduction is not obtainable by using one optical pickup.

In order to solve the above problems, Japanese Laid-Open Publication No. 7-98431, for example, proposes the use of a composite objective lens composed of a combination of a refractive objective lens and a hologram lens.

According to this method, an optical disk includes a plastic or glass substrate with a thickness of 0.6 mm, for example. The refractive objective lens is designed so that a light beam which has passed through the hologram lens without diffraction can be converged on the optical disk with a substrate thickness of 0.6 mm without aberration. The hologram lens is designed so that a light beam which has been diffracted from the hologram lens and has passed through the refractive objective lens can be converged on an optical disk with another substrate thickness, e.g., a thickness of 1.2 mm without aberration.

Japanese Laid-Open Publication No. 7-182690, for example, proposes another method for solving the above problems, where an additional lens is drawn out or retracted mechanically to allow a light beam to be converged on optical disks with different substrate thicknesses.

According to this method, the additional lens is disposed between a semiconductor laser and an objective lens and located on the fixed portion of an optical head. Therefore, the additional lens is not driven integrally with the objective lens. The additional lens may be a concave lens, a convex lens, or even a hologram lens.

However, the above conventional methods are disadvantageous in the following points.

The method using the composite objective lens has the following problems. The refractive objective lens and the hologram lens must be integrally assembled so that the optical axes of these lenses match with each other with high precision and so that the tilts of the lenses are parallel to each other with high precision. This requires complex, high-precision adjustments, and as a result decreases the ability to mass-produce the desired optical pickup.

Even if the complex, high-precision adjustments are correctly completed, the adjustments may possibly degrade over time due to environmental factors. This makes it difficult to maintain or improve the reliability of a device incorporating such an optical pickup.

A lens-barrel is separately required for combining the two lenses. This increases the number of components.

The disk tracking ability of the objective lens may be lowered due to the added weight of the composite lens.

The thickness and size of the composite lens increase because two lenses must be bonded together.

The method where the additional lens is drawn out or retracted has the following problems.

The optical axis of the objective lens and that of the additional lens must match each other when the additional lens is drawn out. The positioning of the additional lens in the direction of the optical axis and the tilt thereof must be highly precise. To achieve this, a high-precision mechanism for drawing out and retracting the additional lens is required. This results in an increase in the device size, an increase in production cost, and a decrease in mass-productivity.

Since the additional lens itself is movable, the position of the lens easily changes due to environmental factors, making it difficult to maintain/improve the reliability.

EP 0 747 893 A2 discloses an optical head apparatus for different types of disks comprising a light source and a holographic optical element to converge a light beam to the disks. The arrangement, shown in this document, comprises a composite lens, which consists of an objective lens and a holographic optical element.

EP 0 610 055 A2 discloses a compound objective lens having two focal points, which consist of an objective lens and a holographic optical element.

### SUMMARY OF THE INVENTION

The hologram laser unit of this invention, which is formed integrally and secured to an optical system including an objective lens for converging a light beam to a first and a second disk with different substrate thicknesses, comprises a laser light source, an optical detector and an optical element, the optical element being disposed between the laser light source and the objective lens, wherein a signal detection hologram element is formed on a surface of the optical element facing the laser light source, the hologram laser unit being characterized in that an aberration compensation element is formed on a surface of the optical element facing the objective lens, the optical element being constructed so that a light beam output from the laser light source and converged by the objective lens on the first disk and on the second disk without aberration is divided into two light beams.

In one embodiment of the invention, the optical element is divided into two parts with an air layer therebetween.

In another embodiment of the invention, the aberration compensation element is formed on part of a center portion of the surface of the optical element and has a spherical lens function.

In still another embodiment of the invention, the aberration compensation element includes a spherical lens portion and a uniaxial crystal material covering the spherical lens portion, so that a light beam incident on the aberration compensation element is divided into a light component which receives the aberration compensation function depending on a polarizing direction of the light beam and a light component which does not receive an aberration compensation function and a ratio of these components can be arbitrarily adjusted.

In still another embodiment of the invention, the aberration compensation element is divided into a plurality of concentric areas.

In still another embodiment of the invention, the number of the concentric areas of the aberration compensation element is three or more.

In still another embodiment of the invention, the aberration compensation element is a hologram having a concentric pattern.

In still another embodiment of the invention, the hologram is a blaze hologram.

In still another embodiment of the invention, the aberration compensation element and the hologram element facing the laser light source are formed on a same substrate.

In still another embodiment of the invention, the aberration compensation element and the hologram element facing the laser light source are formed on different substrates with markers for positioning formed thereon, and then the substrates are bonded together to form the optical element.

According to another aspect of the invention, a two-focus type optical pickup is provided. The optical pickup includes: a first disk having a first thickness and a first refractive index and a second disk having a second thickness and a second refractive index; and
an objective lens designed so as to converge a light beam from a light source on the first disk and the second disk without aberration,
wherein a hologram laser unit is used as the light source, the hologram laser unit comprising a laser light source, an optical detector, and an optical element, the optical element being disposed between the laser light source and the objective lens, wherein a signal detection hologram element is formed on a surface of the optical element facing the laser light source, and wherein an aberration compensation element is formed on a surface of the optical element facing the objective lens, the optical element being constructed so that the light beam output from the laser light source and converged by the objective lens on the first disk and on the second disk without aberration is divided into two light beams.

In one embodiment of the invention, the aberration compensation element is formed on part of a center portion of the surface of the optical element and has a spherical lens function.

In still another embodiment of the invention, the aberration compensation element includes a spherical lens portion and a uniaxial crystal material covering the spherical lens portion, so that a light beam incident on the aberration compensation element is divided into a light component which receives the aberration compensation function depending on a polarizing direction of the light beam and a light component which does not receive an aberration compensation function and a ratio of these components can be arbitrarily adjusted.

In still another embodiment of the invention, the aberration compensation element has a concave lens function when an optical thickness of the first disk in view of the first refractive index is smaller than an optical thickness of the second disk in view of the second refractive index, and has a convex lens function when the thickness of the first disk in view of the first refractive index is larger than the thickness of the second disk in view of the second refractive index.

In still another embodiment of the invention, a light amount of a light beam for the first disk is at least twice as large as a light amount of a light beam for the second disk.

Thus, the optical pickup according to the invention is of a two-focus type which always outputs two types of light beams. The entire optical system is substantially the same in construction as a conventional optical pickup provided with a hologram laser unit as a light source, and thus there is no increase in the number of components. In other words, a novel two-focus type optical pickup can be realized by only forming the aberration compensation element on the optical element of the hologram laser unit, without increasing the number of components of the optical system including the hologram laser unit.

The hologram laser unit is secured to the fixed portion of the optical system. Only the objective lens is movable when the optical system follows an eccentricity and the like of a disk, as in a conventional system. Accordingly, the size of the optical pickup itself is not increased.

Since a movable portion such as a lens switching means is not required, high-precision installment of the optical pickup is possible, and thus excellent reliability can be obtained.

The aberration compensation element may be formed only on the center area of the top surface of the optical element, for example. Since the focal point of a light beam passing through the aberration compensation element is different from that of a light beam passing through the other peripheral area of the optical element, the NA of the objective lens for these light beams changes. This makes it possible to change the diameter of the converged beam spot and improve the tilt characteristic of the disk.

The aberration compensation element may have a spherical lens function. Since the aberration compensation element is secured to the fixing portion of the optical system, an aberration may be generated due to a displacement between the objective lens and the aberration compensation element with respect to the optical axis when the objective lens is shifted at tracking. Such an aberration can be suppressed to such a level that the aberration hardly causes a problem, compared with the case where the aberration is compensated using a non-spherical lens.

The spherical lens of the aberration compensation element may be covered with a uniaxial crystal material. The ratio of a light component which receives the aberration compensation function to a light component which does not receive the aberration compensation function can be arbitrarily adjusted depending on the polarizing direction of the light beam incident on the aberration compensation element. Accordingly, the light utilization rate for the second disk can be easily changed. Such an aberration compensation element serves as if it is divided into an infinite number of areas, though actually it is not divided into any areas. This prevents higher-order diffracted light unnecessary for the profile of the converged light spot from being generated, and thus reduces the diameter of the converged light spot. Moreover, since diffraction is not utilized unlike the case of using a hologram, the generation of unnecessary diffracted light and thus a decline in the intensity of the converged light beam are prevented.

The aberration compensation element may be divided into a plurality of areas. This suppresses the generation of higher-order diffracted light unnecessary for the profile of the converged light spot for the second disk, and thus reduces the diameter of the converged light spot.

When the aberration compensation element is divided into a plurality of areas, preferably into three or more areas, the side lobe intensity in the beam profile of the converged beam spot can be decreased. Thus, the substantial beam diameter can be reduced.

The aberration compensation element may be composed of a hologram. The hologram serves as if it is divided into an infinite number of areas, though actually it is not divided into any areas. This prevents higher-order diffracted light unnecessary for the converged light spot from being generated. Thus, the side lobe intensity in the beam profile can be decreased, and the substantial converged spot diameter can be reduced. As a result, high-resolution recording and reproduction is obtained.

The ratio of the zero-order diffracted light to the first-order diffracted light can be changed by changing the shape (groove depth, pitch, etc.) of the hologram. This makes it possible to easily change the light utilization rate for the second disk.

When the hologram is a blaze hologram, unnecessary diffracted light such as the first-order light can be suppressed. This increases the light utilization efficiency.

The aberration compensation element and the signal detection hologram element may be formed on separate substrates, together with markers for positioning. The resultant substrates are bonded together to complete the optical element. This construction further improves the mass-productivity of the aberration compensation element, and therefore the hologram laser unit and the optical pickup.

In the case where holograms are formed on both surfaces of the optical element, these holograms can be formed by the same processing step. This allows for easy and highly-precise centering between the holograms and thus excellent mass-productivity. Since the optical element is not formed by bonding, reliability is further improved.

The optical pickup using the hologram laser unit with the above construction is excellent in mass-productivity and reliability.

The optical pickup may use an aberration compensation element having a spherical lens function where the spherical lens is covered with a uniaxial crystal material. The aberration compensation element is constructed to have a concave lens function when the optical thickness of the first disk in view of the refractive index thereof is smaller than the optical thickness of the second disk in view of the refractive index thereof, that is, when the focal distance of the hologram laser unit at which a light beam can be converged on the first disk without aberration is shorter than the focal distance of the hologram laser unit at which a light beam can be converged on the second disk without aberration, and has a convex lens function when the optical thickness of the first disk in view of the refractive index thereof is larger than the optical thickness of the second disk in view of the refractive index thereof, that is, when the focal distance of the hologram laser unit at which a light beam can be converged on the first disk without aberration is longer than the focal distance of the hologram laser unit at which a light beam can be converged on the second disk without aberration.

The light amount of the beam for the first disk may be set to be twice or more as large as that of the beam for the second disk. With this setting, the signal quality is prevented from being degraded due to an increased density. In other words, if one of the two disks is a high-density disk, the light beam intensity for the high-density disk can be increased. Thus, the problem of signal shortage is suppressed.

Thus, the invention described herein makes possible the advantages of (1) providing a hologram laser unit capable of providing accurate information recording/reproduction for two types of optical disks having different substrate thicknesses and refractive indices when it is mounted in an optical pickup, (2) providing a hologram laser unit capable of realizing a small, thin optical pickup with excellent mass-productivity and reliability, and (3) providing a two-focus type optical pickup including such a hologram laser unit as a light source.

These and other advantages of the present invention will become apparent to those skilled in the art upon reading and understanding the following detailed description with reference to the accompanying figures.

### BRIEF DESCRIPTION OF THE DRAWINGS

Figure **1** is a schematic front view illustrating an optical system of a two-focus type optical pickup according to Example 1 of the present invention.
Figure **2** is a detailed sectional view illustrating a hologram laser unit according to Example 1 of the present invention.
Figure **3** is a plan view of an optical element according to Example 2 of the present invention.
Figures **4A** and **4B** are sectional views explaining the lens operations according to Example 2 of the present invention.
Figure **5** is a graph representing the aberration amount generated by a displacement of an aberration compensation element with respect to the optical axis.
Figure **6** is a plan view of an optical element according to Example 3 of the present invention.
Figure **7** is a view explaining the beam profile of a converged beam according to Example 3 of the present invention.
Figure **8A** is a plan view of a commercially-available objective lens for DVD where a light-shaded portion is formed in the center.
Figure **8B** is a graph representing the relationship between the diameter of the light-shaded portion of the objective lens of Figure **8A** and the profile of a converged beam.
Figures **9A** and **9B** are plan views of different optical elements according to Example 4 of the present invention, together with the sectional views thereof.
Figures **10A** and **10B** are a plan view and a sectional view, respectively, of an optical element according to Example 5 of the present invention.
Figures **11A**, **11B**, and **11C** are views illustrating the steps of bonding a substrate on which an aberration compensation element is formed and a substrate on which a servo signal detection hologram element is formed together according to Example 6 of the present invention.
Figures **12A** and **12B** are a plan view and a sectional view, respectively, of an optical element according to Example 7 of the present invention.
Figure **13** is a plan view of an optical element according to Example 8 of the present invention.
Figures **14A** and **14B** are sectional views explaining the lens operation of an aberration compensation element of Figure **13** according to Example 8 of the present invention.

### DESCRIPTION OF THE PREFERRED EMBODIMENTS

Hereinbelow, the present invention will be described by way of example with reference to the accompanying drawings.

### (Example 1)

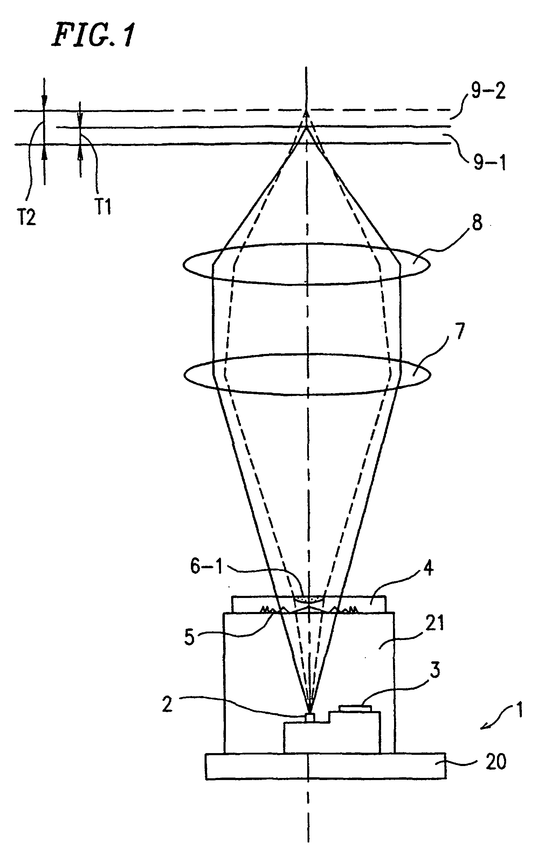

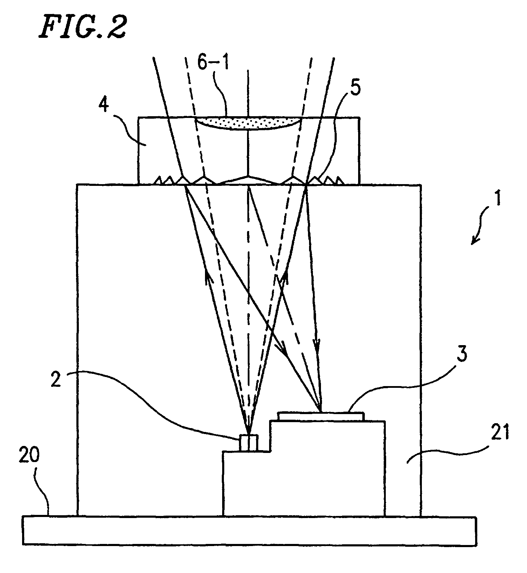

An optical pickup, including a hologram laser unit, according to Example 1 of the present invention will be described with reference to Figures **1** and **2.**

The optical pickup of this example is of a two-focus type where a light beam can be converged on two types of disks (optical disks) **9-1** and **9-2** with different substrate thicknesses without aberration, and includes an optical system composed of a hologram laser unit **1**, a collimator lens **7**, and an objective lens **8**. The thicknesses of the disks **9-1** and **9-2** are **T1** and **T2** (**T1** < **T2**), respectively.

Figure **2** illustrates the hologram laser unit **1** in detail. The hologram laser unit **1** is secured to a base substrate **20**, and includes a semiconductor laser **2** and an optical detector **3** made of a photodiode which are integrally disposed in a cylindrical or rectangular-parallelopiped package **21** made of metal or resin, for example.

A block-like optical element **4** is disposed on the top surface of the package **21**. An aberration compensation element **6-1** is formed on the center of the top surface of the optical element **4**. On the bottom surface of the optical element **4**, a signal detection hologram element **5** is formed.

The operation of the optical pickup with the above construction will be described. Light emitted upward from the semiconductor laser **2** of the hologram laser unit **1** is incident on the optical element **4**. Part of the incident light (a light beam in the center portion) is subjected to wave front conversion (aberration compensation) by the aberration compensation element **6-1**, and passes through the collimator lens **7**. The light is then incident on the objective lens **8** disposed above the collimator lens **7**, so as to be converged on the information recording surface of the disk **9-2** with the thickness **T2** without aberration, as shown by the broken lines in Figure 1.

The other part of the incident light (a light beam in the peripheral portion) which has not passed through the aberration compensation element **6-1** is converged on the information recording surface of the disk **9-1** with the thickness **T1** without aberration, as shown by the solid lines in Figure **1**.

Light reflected from the disk **9-1** (or **9-2**) returns along the same route through the objective lens **8**, the collimator lens **7**, and the optical element **4**, and then diffracted by the signal detection hologram element **5** to be incident on the optical detector **3**. The incident light is then subjected to photoelectric conversion by the optical detector **3** to detect the information signal.

Although the optical pickup of Example 1 is of a two-focus type which always outputs two light beams, the entire optical system is substantially the same in construction as the conventional optical pickup using a hologram laser unit as a light source. No additional components are required. In other words, a novel two-focus type optical pickup can be realized by only subjecting the optical element **4** of the hologram laser unit **1** to a minimal amount of processing, without increasing the number of components of the optical system including the hologram laser unit.

The hologram laser unit **1** in Example 1 is secured to the fixed portion of the optical system as described above. Only the objective lens **8** is movable when the optical system is required to follow an eccentricity and the like of the disk, as in the conventional system. Accordingly, the size of the optical pickup itself is not increased.

Since a movable portion such as a lens switching means is not required, high-precision installment of the optical pickup is possible, and thus excellent reliability can be obtained.

### (Example 2)

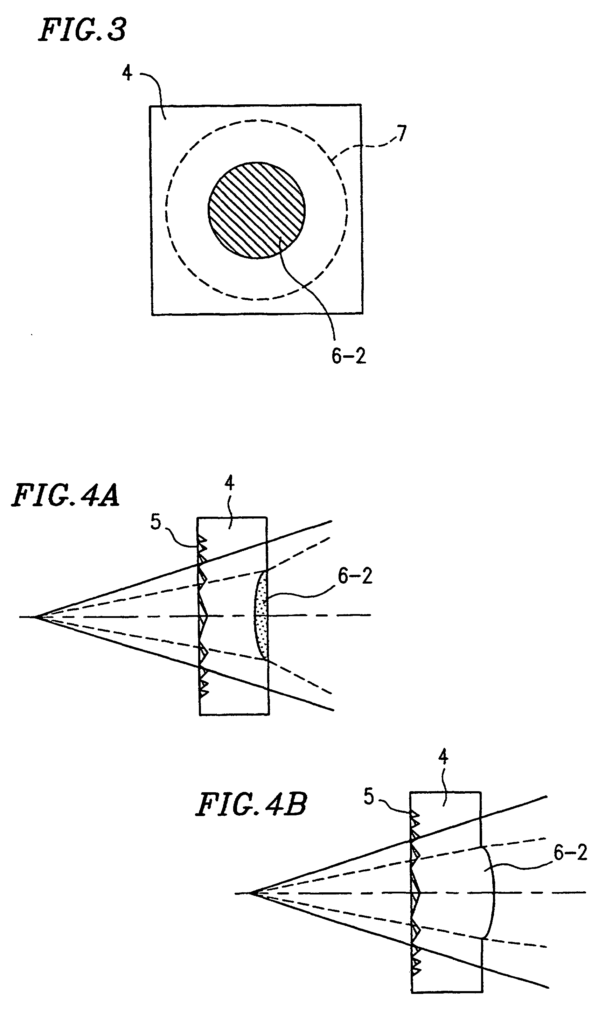

A hologram laser unit according to Example 2 of the present invention will be described with reference to Figures **3, 4A, 4B,** and **5**. The hologram laser unit of this example is characterized by an aberration compensation element **6-2** formed on an optical element **4**. The aberration compensation element **6-2,** which is substantially the same as the aberration compensation element **6-1** in Example 1, will be described in detail.

Referring to Figure **3**, the aberration compensation element **6-2** is formed in a circle shape on the center area of the top surface of the optical element **4.** The diameter thereof is sufficiently small compared with the diameter of an incident beam **7.**

As in Example 1, only the center portion of the light beam which has passed through the aberration compensation element **6-2** is subjected to the aberration compensation, to be converged on the information recording surface of a disk with a thicker substrate.

Since the aberration compensation element **6-2** is only formed on the center area of the top surface of the optical element **4**, the focal point of a light beam passing through the aberration compensation element is different from that of a light beam passing through the peripheral area of the optical element. As a result, the NA of the objective lens for these light beams changes. This makes it possible to change the diameter of the converged beam spot, and improve the tilt characteristic of the disk.

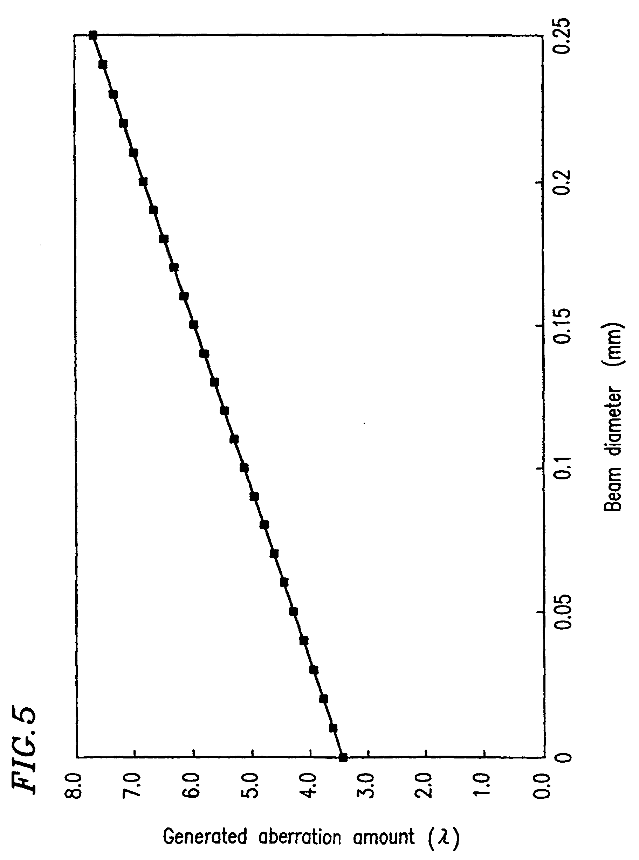

The aberration compensation element **6-2** in Example 2 is a lens having a spherical lens function. For example, when a second disk (the disk **9-2** in Figure **1**) is thicker than a first disk (the disk **9-1** in Figure **2**), or the former has a larger refractive index than the latter, the aberration compensation element **6-2** serves as a concave lens as shown in Figure **4A**. On the contrary, when the second disk is thinner than the first disk, or the former has a smaller refractive index than the latter, the aberration compensation element **6-2** serves as a convex lens as shown in Figure **4B**.

The aberration compensation can also be obtained by using a non-spherical lens. However, the aberration compensation element **6-2** is secured to a fixed portion of the optical system as part of the hologram laser unit, which is separate from the objective lens, as described above. If the objective lens is shifted with respect to the optical axis during tracking, a displacement is generated between the objective lens and the aberration compensation element **6-2** with respect to the optical axis (hereinbelow, such a displacement is referred to as an "optical axis displacement").

If a non-spherical lens is used for the aberration compensation element **6-2**, the aberration amount generated by the optical axis displacement increases compared with the case of using the spherical lens. This may prevent a light beam from being converged on the information recording surface of the disk with high precision.

When a spherical lens is used, the aberration amount generated by an optical axis displacement between the spherical lens and the objective lens, if generated, exhibits a linear relationship with the beam diameter as shown in Figure **5**. Accordingly, the aberration due to the optical axis displacement can be substantially cancelled by shifting an image surface in the direction of the optical axis displacement (the direction vertical to the optical axis). Figure **5** shows the displacement of a light path length (compensation error) at arbitrary positions on the objective lens in the radial direction when an optical axis displacement of 0.4 mm is generated.

As a result, the aberration compensation element **6-2** in Example 2 is free from the problems caused by the optical axis displacement.

### (Example 3)

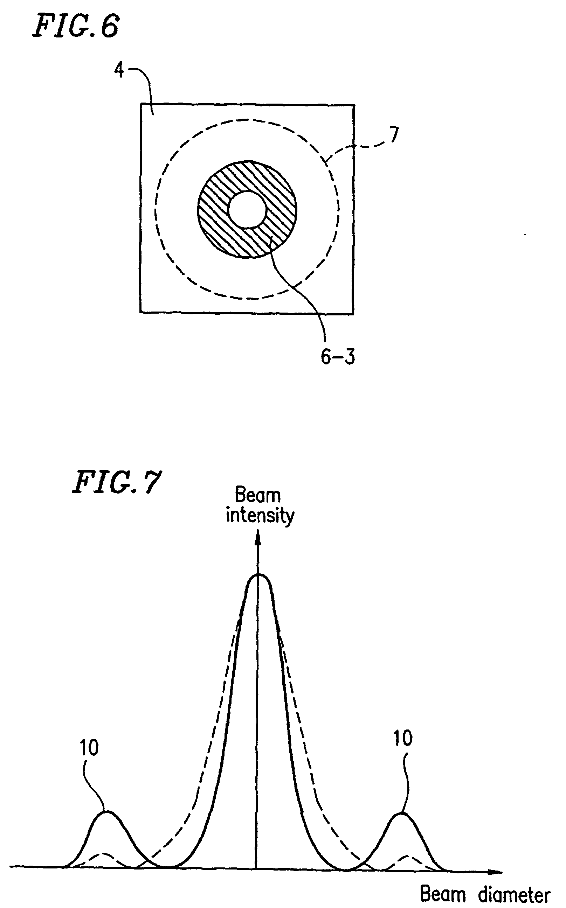

A hologram laser unit according to Example 3 of the present invention will be described with reference to Figures **6**, **7**, **8A**, and **8B**. As in the previous examples, the hologram laser unit of this example is characterized by an aberration compensation element **6-3** formed on an optical element **4**. The aberration compensation element **6-3** will be described in detail.

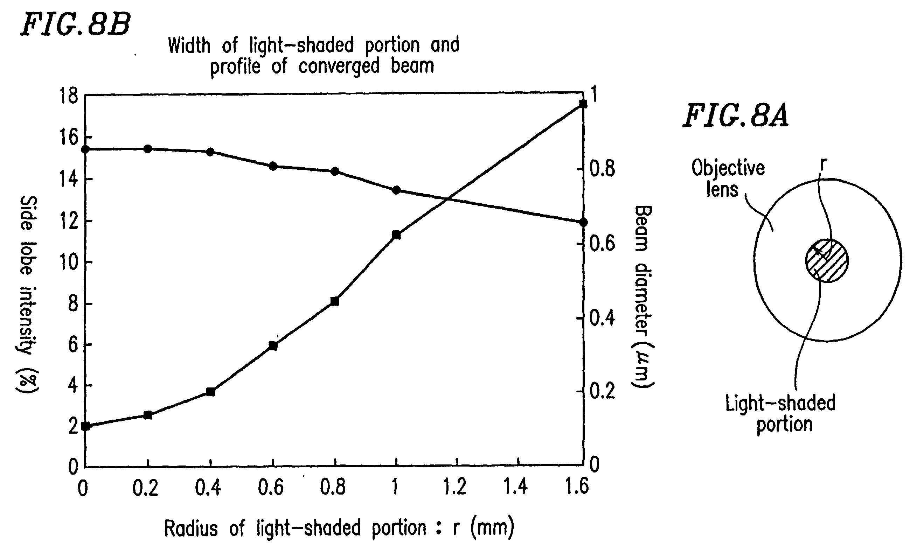

Referring to Figure **6**, the aberration compensation element **6-3** in Example 3 is of a ring-shape unlike the circle-shaped aberration compensation element **6-2** in Example 2. That is, the top surface of the optical element **4** is divided into three areas: a center circle area where the aberration compensation element **6-3** is not formed; a ring area of the aberration compensation element **6-3**; and a peripheral area where the aberration compensation element **6-3** is not formed. This is clearly different from the aberration compensation element **6-2** according to Example 2 where the top surface of the optical element **4** is divided into two areas, the inner area (where the aberration compensation element is formed) and the outer area (where the aberration compensation element is not formed). Hereinbelow, the effect obtained by the aberration compensation element **6-3** of Example 3 will be described, in comparison with the aberration compensation element **6-2** of Example 2, with reference to Figures **7**, **8A**, and **8B**.

The aberration compensation element **6-2** according to Example 2 is simple in shape and thus has good processability compared with the aberration compensation element **6-3** according to Example 3. However, the area of the aberration compensation element **6-2** with respect to the incident beam **7** is larger than that of the aberration compensation element **6-3**.

When the area of the aberration compensation element is large with respect to the incident beam **7**, the beam spot converged on the first disk, i.e., a beam spot which has not been subjected to the aberration compensation, has an intensity distribution as shown by the solid line in Figure **7**. That is, although the influence of higher-order diffracted light is significantly exhibited, and the diameter of the converged beam becomes small, the intensity at side lobes **10** increases. As a result, the substantial beam diameter increases.

This problem will be described more specifically with reference to Figures **8A** and **8B**. Figure **8A** shows a commercially available objective lens for DVD (digital video disk) where a light-shaded portion is formed at the center. Figure **8B** is a graph representing the relationship between the radius **r** of the light-shaded portion of the objective lens of Figure **8A** and the profile of the converged beam. The line connecting points marked ● represents the relationship between the radius **r** (mm) of the light-shaded portion and the diameter (µm) of the converged beam, while the line connecting points marked ■ represents the relationship between the radius **r** (mm) of the light-shaded portion and the side lobe intensity (%).

As is observed from the graph, as the radius **r** becomes larger, the side lobe intensity becomes markedly higher.

Forming a portion providing a different focal point, i.e., the aberration compensation portion, in the center portion of the optical system including the collimator lens **7** and the objective lens **8** provides substantially the same phenomenon as that exhibited when the center portion is light-shaded, for the other peripheral portion of the optical system. Accordingly, the aberration compensation element **6-2** of Example 2 where the radius **r** (corresponding to the area actually light-shaded) is larger has a higher side lobe intensity, and thus the resultant substantial beam diameter is larger, compared with the aberration compensation optical element **6-3** of Example 3.

On the contrary, in the aberration compensation element **6-3** of Example 3 having a center hole, the radius **r** is substantially reduced, and thus the side lobe intensity **10** decreases. As a result, the beam profile as shown by the broken line in Figure **7** is obtained. In this way, an increase in side lobe intensity can be suppressed, and thus the substantial beam diameter can be reduced.

### (Example 4)

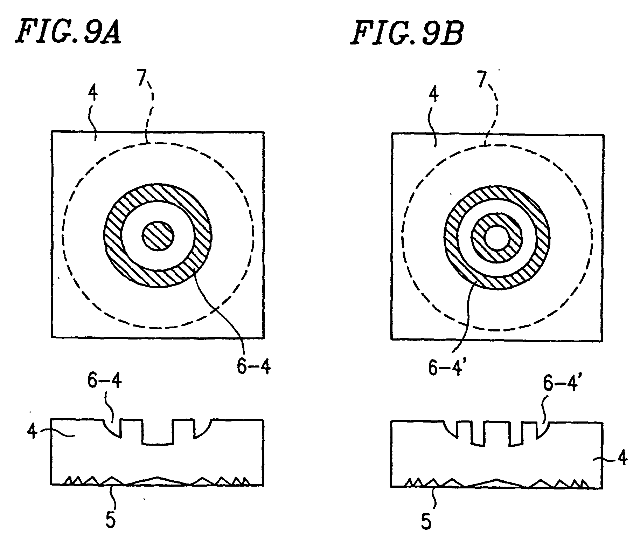

A hologram laser unit according to Example 4 will be described with reference to Figures **9A** and **9B**. As in the previous examples, the hologram laser unit of this example is characterized by an aberration compensation element **6-4** formed on an optical element **4**. The aberration compensation element **6-4** will be described in detail.

The aberration compensation element **6-4** of Example 4 is divided into three or more areas, unlike the aberration compensation element **6-3** of Example 3 which is divided into two areas.

More specifically, referring to Figure **9A**, the top surface of the optical element 4 is divided into four areas: a center circle area which is an aberration compensation portion; a surrounding ring area which is not an aberration compensation portion; an outer ring area which is an aberration compensation portion; and a peripheral area which is not an aberration compensation portion.

Figure **9B** shows an alternative aberration compensation element **6-4'** according to Example **4** of the present invention. In the aberration compensation element **6-4'**, the top surface of the optical element **4** is divided into five areas: a center circle area which is not an aberration compensation portion; an inner ring area which is an aberration compensation portion; a surrounding ring area which is not an aberration compensation portion; an outer ring area which is an aberration compensation portion; and a peripheral area which is not an aberration compensation portion.

Thus, in Example 4, the aberration compensation elements **6-4** and **6-4'** are radially divided into three or more areas as shown in Figures **9A** and **9B**.

The aberration compensation element **6-4** and **6-4'** of Example 4 having three or more divided areas have the following advantages over the aberration compensation element **6-3** of Example 3 having two divided areas.

The aberration compensation element **6-3** shown in Figure **6** is advantageous in that the substantial diameter of the beam converged on the first disk can be reduced. However, it has a problem as described above. That is, when the beam is converged on the second disk via the aberration compensation element, the center circle area which is not an aberration compensation portion serves as a light-shaded area for the other area which is an aberration compensation portion. Accordingly, in the intensity distribution of the beam spot converged on the second disk (i.e., a beam spot subjected to the aberration compensation), although the diameter of the converged beam is small, the influence of higher-order diffracted light is significantly exhibited, increasing the intensity at the side lobes **10** of the beam profile. As a result, the substantial beam diameter increases.

However, the aberration compensation elements **6-4** and **6-4'** in Example 4 are radially divided into three or more areas (i.e., the top surface of the optical element **4** is divided into four or more areas). As a result, an increase in the side lobe intensity of the converged beam can be suppressed for both the first and second disks, and thus the substantial beam diameter can be reduced. That is, both the beams converged on the first and second disks have better characteristics as the number of divided areas of the aberration compensation element is larger for the reason described with reference to Figures **8A** and **8B**.

### (Example 5)

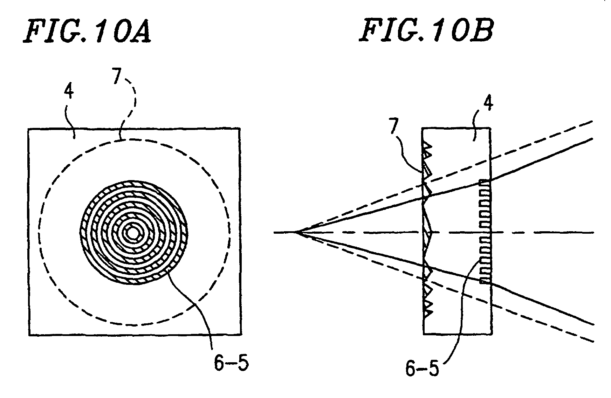

A hologram laser unit according to Example 5 will be described with reference to Figures **10A** and **10B**. As in the previous examples, the hologram laser unit of this example is characterized by an aberration compensation element **6-5** formed on an optical element **4**. The aberration compensation element **6-5** will be described in detail.

An optical pickup including the hologram laser unit of Example 5 is intended to be usable for not only the conventional disks such as CDs but also for disks with a smaller substrate thickness for achieving higher densities.

As the density of a disk increases, the resultant signal quality may degrade (the S/N ratio may degrade). In order to suppress the degradation of the signal quality as much as possible, a light beam intensity should be as large as possible to compensate the signal shortage.

However, when the two-focus type lens is used, the light beam intensity for each disk decreases since the light beam is divided into two. In two-focus type lens, therefore, the high-density disk should be given priority over the conventional disk in the light beam intensity. However, if this is done, the light beam intensity for the conventional disk decreases greatly. Therefore, in order to realize the above intention, it is important to balance between the two disks.

In order to achieve such balancing, the aberration compensation element **6-5** in Example 5 is radially divided into 10 areas at a pitch of 0.1 mm (i.e., the top surface of the optical element **4** is divided into 11 areas). The hatched areas of the aberration compensation element **6-5** shown in Figure **10A** correspond to areas for the second disk which are aberration compensation portions, while the other areas thereof correspond to areas for the first disk which are not aberration compensation portions.

The light amounts to be received by the two disks were calculated in view of the intensity distribution of the beam incident on the aberration compensation element **6-5**. As a result, light amounts received by the first and second disks were about 70 and about 30 when the total light amount is **100.** That is, the first disk receives a light amount of about 2.3 times greater than that received by the second disk.

In this way, when a high-density disk is used as one of the disks for signal reproduction by the optical pickup, the light amount for the high-density disk should be set to be at least twice as large as that of the other disk. By using such a setting, the problems of the signal shortage, and thus degradation of the signal quality, can be overcome.

### (Example 6)

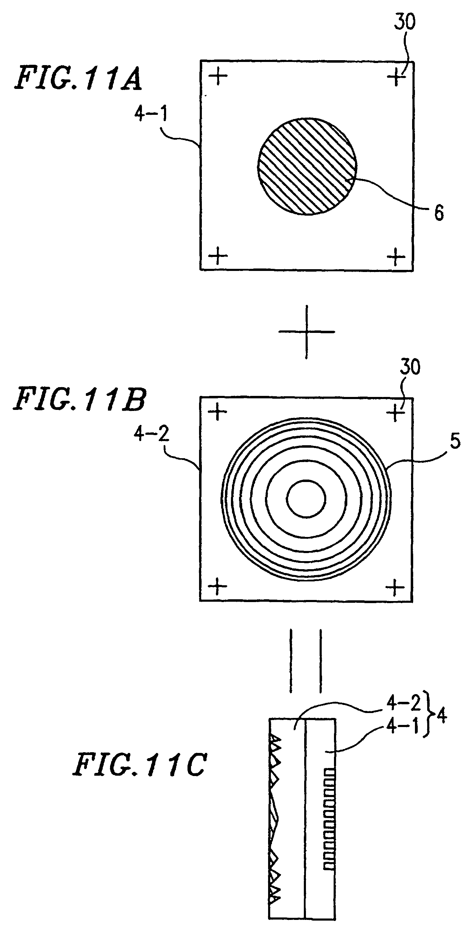

The hologram laser unit according to Example 6 of the present invention will be described with reference to Figures **11A** to **11C**. The hologram laser unit of this example is characterized by the fabrication method of an optical element **4**, as will be described in detail below.

In Examples 1 to 5 above, the signal detection hologram element **5** is formed on the bottom surface of the optical element **4**, on the top surface of which one of the aberration compensation elements **6-1** to **6-5** (in this example, generically called the aberration compensation element **6**) is formed.

The servo signal detection hologram element **5** is formed by etching, for example. The aberration compensation element **6** is formed by a molding method where a metal jig is pressed against a resin surface. Thus, since the servo signal detection hologram element **5** and the aberration compensation element **6** are not formed by a same method, it is difficult to produce these elements on the same substrate with good mass-productivity.

In order to overcome this problem, in Example 6, the aberration compensation element **6** and the hologram element **5** are formed on separate resin substrates as optical elements **4-1** and **4-2**, respectively, together with markers **30**. Then, the two optical elements **4-1** and **4-2** are bonded together so that the markers **30** match with each other, thereby integrating the two optical elements.

In this method, since the two optical elements **4-1** and **4-2** can be easily aligned with each other, the mass-productivity of the optical element 4, i.e., the hologram laser unit, and the resultant optical pickup does not decrease, thereby greatly contributing to the cost reduction thereof.

### (Example 7)

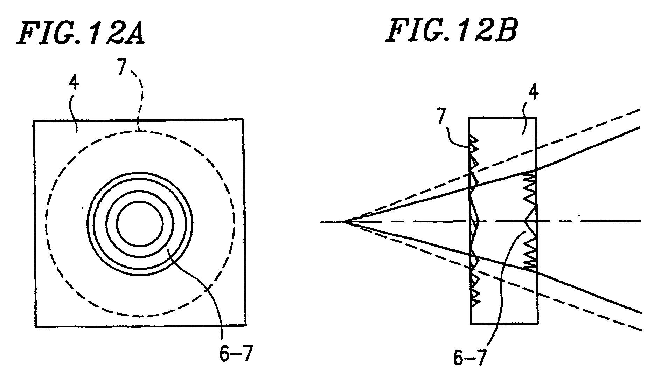

A hologram laser unit according to Example 7 of the present invention will be described with reference to Figures **12A** and **12B**. The hologram laser unit of this example is characterized by an aberration compensation element **6-7** formed on an optical element **4**. The aberration compensation element **6-7** will be described in detail.

As shown in Figures **12A** and **12B**, the aberration compensation element **6-7** of Example 7 is composed of a hologram. The hologram **6-7** is formed only on the center area of the top surface of an optical element **4** with respect to an incident beam **7**, as in Example 2 shown in Figure **3**.

The hologram **6-7** provides a spherical lens function for the first-order diffracted light component, but does not provide it for the zero-order diffracted light component. As a result, the first-order diffracted light component is converged on the second disk without aberration, while the zero-order diffracted light component and light passing through the peripheral area where the hologram **6-7** is not formed are converged on the first disk without aberration.

The ratio of the light amounts of the zero-order diffracted light component to the first-order diffracted light component can be changed by changing the depth of the grooves of the hologram **6-7**. Accordingly, by increasing the ratio of the light amount of the zero-order diffracted light component, the light component passing through the center area where the hologram **6-7** is formed is permitted to converge on the first disk. As a result, the influence of higher-order diffracted light on the converged beam spot decreases, and thus an increase in side lobe intensity can be suppressed.

Thus, the aberration compensation element **6-7** in Example 7 serves as if it is divided into an infinite number of areas, though actually it is not divided into any areas. This prevents higher-order diffracted light unnecessary for the profile of the converged light spot from being generated, and thus the substantial beam diameter can be reduced. As a result, information recording/reproduction with high resolution can be realized.

The aberration compensation element **6-7** preferably has a saw-shaped blaze section. A blaze hologram can suppress unnecessary diffracted light such as minus first-order diffracted light. This increases the light amount contributing to the converged light beam, i.e., the light utilization efficiency.

As in Example 5, the hologram **6-7** permits the intensities of the light beams for the two types of disks to be changed by adjusting the area of the hologram and the diffraction efficiency (depth of grooves) of the hologram.

Thus, in this example, as in Example 5, when one of the two types of disks is a high-density disk, the light amount for the high-density disk can be easily set to be at least twice as large as that for the other disk. Accordingly, when information recorded on the high-density disk is to be reproduced, the signal quality is prevented from degrading due to a decline in the light beam intensity.

In Example 7, since the aberration compensation element **6-7** is composed of a hologram, it can be formed together with the signal detection hologram element **5** which is formed on the opposite surface of the optical element **4** during the same processing step. The alignment of these holograms with respect to the optical axis can be easily performed. Thus, a hologram laser unit with excellent mass-productivity and reliability can be realized.

### (Example 8)

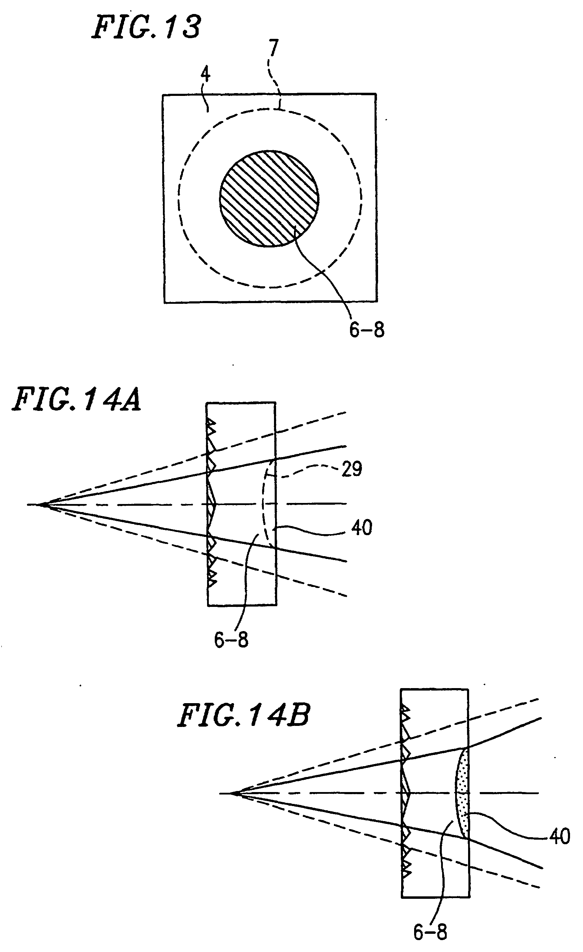

A hologram laser unit according to Example 8 of the present invention will be described with reference to Figures **13, 14A,** and **14B**. The hologram laser unit of this example is characterized by an aberration compensation element **6-8** formed on the top surface of an optical element 4. The aberration compensation element **6-8** will be described in detail.

The aberration compensation element **6-8** of Example 8 includes a plano-concave lens (or a plano-convex lens, not pictured) **29** and a uniaxial crystal material **40** covering the lens surface. The refractive index of the uniaxial crystal material **40** at either the minor axis or the major axis thereof and the refractive index of the lens are set substantially the same.

For example, as shown in Figure **14A**, when the polarizing direction of an incident light beam is aligned with the optic axis of the uniaxial crystal material 40 at which the refractive index is substantially the same as that of the lens, the incident light beam does not recognize the lens, passing through the lens without being refracted by the lens.

On the contrary, as shown in Figure **14B**, when the polarizing direction of an incident light beam is aligned with the optic axis of the uniaxial crystal material **40** at which the refractive index is different from that of the lens, the incident light beam recognizes the lens as a lens having a refractive index corresponding to the difference in the refractive index between the lens **29** and the uniaxial crystal material **40**, receiving a refraction by the lens.

More specifically, in Example 8, light passing through the aberration compensation element **6-8** is divided into a component which receives the compensation function and a component which does not receive the compensation function depending on the angle between the polarizing direction of the incident light beam and the optic axis of the uniaxial crystal material **40**. Moreover, the ratio of the two components can be arbitrarily changed.

Thus, as in the aberration compensation element **6-7** in Example 7, the aberration compensation element **6-8** in Example 8 serves as if it is divided into an infinite number of areas, though actually it is not divided into any areas. This prevents higher-order diffracted light unnecessary for the profile of the converged light spot from being generated, and thus the substantial beam diameter can be reduced

Since this example does not utilize the diffraction unlike the case of using a hologram, the generation of unnecessary diffracted light and thus a decline in the converged beam intensity are prevented.

Thus, in this example, when one of the two types of disks is a high-density disk, the light amount for the high-density disk can be easily set to be at least twice as large as that of the other disk by adjusting the angle between the polarizing direction of the incident light beam and the optic axis of the uniaxial crystal material **40**. Accordingly, when information recorded on the high-density disk is to be reproduced, the signal quality is prevented from degrading due to a decline in the light beam intensity.

In the above examples, the optical element having the aberration compensation element and the signal detection hologram element integrally formed on the top and bottom surfaces of a transparent substrate, or the optical element composed of two substrates respectively having the aberration compensation element and the signal detection hologram element bonded together with no gap therebetween is used. It is also possible to use a so-called division-type optical element where the above two substrates are bonded with an air layer formed therebetween.

## Claims

1. A hologram laser unit (1) formed integrally and secured to an optical system including an objective lens (8) for converging a light beam to a first and a second disk (9-1, 9-2) with different substrate thicknesses (T1, T2), the hologram laser unit comprising:
- a laser light source (2),
- an optical detector (3), and
- an optical element (4) being disposed between the laser light source and the objective lens, wherein a signal detection hologram element (5) is formed on a surface of the optical element facing the laser light source
**characterized in that** an aberration compensation element (6-1 to 6-8) is formed on a surface of the optical element (4) facing the objective lens (8), the optical element being constructed so that a light beam output from the laser light source and converged by the objective lens on the first disk and on the second disk without aberration is divided into two light beams.

2. A hologram laser unit according to claim 1, wherein the optical element is divided into two parts with an air layer therebetween.

3. A hologram laser unit according to claim 1, wherein the aberation compensation element is formed on part of a center portion of the surface of the optical element and has a spherical lens function.

4. A hologram laser unit according to claim 3, wherein the aberration compensation element comprises a spherical lens portion and a uniaxial crystal material covering the spherical lens portion, so that a light beam incident on the aberration compensation element is divided into a light component which receives the aberration compensation function depending on a polarizing direction of the light beam and a light component which does not receive an aberration compensation function and a ratio of these components can be arbitrarily adjusted.

5. A hologram laser unit according to claim 1, wherein the aberration compensation element is divided into a plurality of concentric areas.

6. A hologram laser unit according to claim 5, wherein the number of the concentric areas of the aberration compensation element is three or more.

7. A hologram laser unit according to claim 1, wherein the aberration compensation element is a hologram having a concentric pattern.

8. A hologram laser unit according to claim 7, wherein the hologram is a blaze hologram.

9. A hologram laser unit according to claim 1, wherein the aberration compensation element and the hologram element facing the laser light source are formed on a same substrate.

10. A hologram laser unit according to claim 1, wherein the aberration compensation element and the hologram element facing the laser light source are formed on different substrates with markers for positioning formed thereon, and then the substrates are bonded together to form the optical element.

11. A two-focus type optical pickup comprising:
a first disk (9-1) having a first thickness (T1) and a first refractive index and a second disk (9-2) having a second thickness (T2) and a second refractive index; and
an objective lens (8) designed so as to converge a light beam from a light source (2) on the first disk and the second disk,
wherein a hologram laser unit (1) is used as the light source, the hologram laser unit (1) comprising:
- a laser light source (2),
- an optical detector (3), and
- an optical element (4), the optical element being disposed between the laser light source and the objective lens, wherein a signal detection hologram element (5) is formed on a surface of the optical element facing the laser light source, and
wherein an aberration compensation element (6-1 to 6-8) is formed on a surface of the optical element (4) facing the objective lens (8), the optical element being constructed so that the light beam output from the laser light source and converged by the objective lens on the first disk and on the second disk without aberration is divided into two light beams.

12. A two-focus type optical pickup according to claim 11, wherein the aberration compensation element is formed on part of a center portion of the surface of the optical element and has a spherical lens function.

13. A two-focus type optical pickup according to claim 12, wherein the aberration compensation element comprises a spherical lens portion and a uniaxial crystal material covering the spherical lens portion, so that a light beam incident on the aberration compensation element is divided into a light component which receives the aberration compensation function depending on a polarizing direction of the light beam and a light component which does not receive an aberration compensation function and a ratio of these components can be arbitrarily adjusted.

14. A two-focus type optical pickup according to claim 13, wherein the aberration compensation element has a concave lens function when an optical thickness of the first disk in view of the first refractive index is smaller than an optical thickness of the second disk in view of the second refractive index, and has a convex lens function when the optical thickness of the first disk in view of the first refractive index is larger than the optical thickness of the second disk in view of the second refractive index.

15. A two-focus type optical pickup according to claim 11, wherein a light amount of a light beam for the first disk is at least twice as large as a light amount of a light beam for the second disk.

## Patentansprüche

1. Hologramm-Lasereinheit (1), die integriert ausgebildet und an einem optischen System gesichert ist, mit einer Objektivlinse (8) zum Konvergieren eines Lichtstrahls auf eine erste und eine zweite Platte (9-1,9-2) mit unterschiedlichen Substratdicken (T1, T2), umfassend:
- eine Laser-Lichtquelle (2),
- einen optischen Detektor (3), und
- eine zwischen der Laser-Lichtquelle und der Objektivlinse angeordnete optische Komponente (4), wobei eine Hologrammkomponente zur Signaldetektion (5) auf einer der Laser-Lichtquelle gegenüberliegenden Oberfläche der optischen Komponente ausgebildet ist,
**dadurch charakterisiert, dass** eine Kompensationskomponente für Abbildungsfehler (6-1 bis 6-8) auf einer der Objektivlinse (8) gegenüberliegenden Oberfläche der optischen Komponente (4) ausgebildet ist, wobei die optische Komponente derart gestaltet ist, dass ein von der Laser-Lichtquelle ausgehender Lichtstrahl, der mit Hilfe der Objektivlinse auf die erste Platte und die zweite Platte ohne Abbildungsfehler konvergiert wurde, in zwei Lichtstrahlen aufgeteilt wird.

2. Hologramm-Lasereinheit nach Anspruch 1, wobei die optische Komponente in zwei Teile mit einer zwischenliegenden Luftschicht geteilt ist.

3. Hologramm-Lasereinheit nach Anspruch 1, wobei die Kompensationskomponente für Abbildungsfehler auf einem Teil eines zentralen Bereichs der Oberfläche der optischen Komponente ausgebildet ist und eine sphärische Linsenfunktion aufweist.

4. Hologramm-Lasereinheit nach Anspruch 3, wobei die Kompensationskomponente für Abbildungsfehler einen sphärischen Linsenbereich und ein den sphärischen Abbildungsfehler für Linsenbereich bedeckendes uniaxiales Kristallmaterial aufweist, so dass ein auf die Kompensationskomponente für Abbildungsfehler auftreffender Lichtstrahl in eine Lichtkomponente, die die Abbildungsfehlerkompensation abhängig von einer Polarisationsrichtung des Lichtstrahls erhält und eine Lichtkomponente, die keine Abbildungsfehlerkompensation erhält, aufgeteilt wird, wobei ein Verhältnis dieser Komponenten beliebig einstellbar ist.

5. Hologramm-Lasereinheit nach Anspruch 1, wobei die Kompensationskomponente für Abbildungsfehler in eine Mehrzahl konzentrischer Flächen aufgeteilt ist.

6. Hologramm-Lasereinheit nach Anspruch 5, wobei die Anzahl der konzentrischen Flächen der Kompensationskomponente für Abbildungsfehler drei oder mehr beträgt.

7. Hologramm-Lasereinheit nach Anspruch 1, wobei die Kompensationskomponente für Abbildungsfehler ein Hologramm mit konzentrischen Mustern ist.

8. Hologramm-Lasereinheit nach Anspruch 7, wobei das Hologramm ein Blaze Hologramm ist.

9. Hologramm-Lasereinheit nach Anspruch 1, wobei die Kompensationskomponente für Abbildungsfehler und die der Laser-Lichtquelle gegenüberliegende Hologramm-Komponente auf einem gemeinsamen Substrat ausgebildet sind.

10. Hologramm-Lasereinheit nach Anspruch 1, wobei die der Laser-Lichtquelle gegenüberliegende Kompensationskomponente für Abbildungsfehler und die Hologramm-Komponente auf verschiedenen Substraten mit darauf angebrachten Markierungen zu deren Positionierung ausgebildet sind und die Substrate zur Ausbildung der optischen Komponente aufeinander gebondet sind.

11. Abtastvorrichtung mit zwei Brennweiten mit:
einer ersten Platte (9-1) mit einer ersten Dicke (T1) und einem ersten Brechungsindex und einer zweite Platte (9-2) mit einer zweiten Dicke (T2) und einem zweiten Brechungsindex; und
einer Objektivlinse (8) zum Konvergieren eines Lichtstrahls von der Lichtquelle (2) auf die erste Platte und die zweite Platte, wobei eine Hologramm-Lasereinheit (1) als Lichtquelle verwendet wird und die Hologramm-Lasereinheit (1) umfasst:
- eine Laser-Lichtquelle (2),
- einen optischen Detektor (3) und
- eine optische Komponente (4), wobei die optische Komponente zwischen der Laser-Lichtquelle und der Objektivlinse angeordnet ist und eine - Hologramm-Komponente zur Signaldetektion (5) auf einer der Laser-Lichtquelle gegenüberliegenden Oberfläche der optischen Komponente ausgebildet ist, sowie
einer auf der der Objektivlinse (8) gegenüberliegenden Oberfläche der optischen Komponente (4) ausgebildeten Kompensationskomponente für Abbildungsfehler (6-1 bis 6-8), wobei die optische Komponente derart gestaltet ist, dass der von der Laser-Lichtquelle ausgehende und über die Objektivlinse auf die erste Platte und die zweite Platte ohne Abbildungsfehler konvergierte Lichtstrahl in zwei Lichtstrahlen aufgeteilt wird.

12. Abtastvorrichtung mit zwei Brennweiten nach Anspruch 11, wobei die Kompensationskomponente für Abbildungsfehler auf einem Teil eines zentralen Bereichs der Oberfläche der optischen Komponente ausgebildet ist und eine sphärische Linsenfunktion aufweist.

13. Abtastvorrichtung mit zwei Brennweiten nach Anspruch 12, wobei die Kompensationskomponente für Abbildungsfehler einen sphärischen Linsenbereich und ein den sphärischen Linsenbereich bedeckendes uniaxiales Kristallmaterial aufweist, so dass ein auf die Kompensationskomponente für Abbildungsfehler auftreffender Lichtstrahl in eine Lichtkomponente, die die Abbildungsfehlerkompensation abhängig von einer Polarisationsrichtung des Lichtstrahls erhält, und eine Lichtkomponente, die keine Abbildungsfehlerkompensation erhält, aufgeteilt wird, wobei ein Verhältnis dieser Komponenten beliebig einstellbar ist.

14. Abtastvorrichtung mit zwei Brennweiten nach Anspruch 13, wobei die Kompensationskomponente für Abbildungsfehler eine konkave Linsenfunktion für den Fall aufweist, dass eine optische Dicke der ersten Platte bezüglich des ersten Brechungsindex kleiner ist als eine optische Dicke der zweiten Platte bezüglich des zweiten Brechungsindex und eine konvexe Linsenfunktion aufweist, falls die optische Dicke der ersten Platte bezüglich des ersten Brechungsindex größer als die optische Dicke der zweiten Platte bezüglich des zweiten Brechungsindex ist.

15. Abtastvorrichtung mit zwei Brennweiten nach Anspruch 11, wobei eine Lichtmenge eines Lichtstrahls für die erste Platte wenigstens doppelt so groß ist als eine Lichtmenge eines Lichtstrahls für die zweite Platte.

## Revendications

1. Unité de laser à hologramme (1) formée intégralement et fixée à un système optique comprenant une lentille d'objectif (8) destinée à faire converger un faisceau de lumière vers un premier et un deuxième disques (9-1, 9-2) avec différentes épaisseurs de substrat (T1, T2), l'unité de laser à hologramme comprenant :
une source de lumière laser (2),
un capteur optique (3), et
un élément optique (4) qui est disposé entre la source de lumière laser et la lentille d'objectif, dans lequel un élément formant hologramme à détection de signal (5) est formé sur une surface de l'élément optique faisant face à la source de lumière laser,
**caractérisée en ce qu'**un élément de compensation d'aberration (6-1 à 6-8) est formé sur une surface de l'élément optique (4) faisant face à la lentille d'objectif (8), l'élément optique étant construit de sorte qu'un faisceau de lumière émis depuis une source de lumière laser et convergé par la lentille d'objectif sur le premier disque et sur le deuxième disque sans aberration est divisé en deux faisceaux de lumière.

2. Unité de laser à hologramme selon la revendication 1, dans laquelle l'élément optique est divisé en deux parties avec une couche d'air entre les deux.

3. Unité de laser à hologramme selon la revendication 1, dans laquelle un élément de compensation d'aberration est formé sur une partie d'une partie centrale de la surface de l'élément optique et présente une fonction de lentille sphérique.

4. Unité de laser à hologramme selon la revendication 3, dans laquelle l'élément de compensation d'aberration comprend une partie de lentille sphérique et un matériau cristallin uniaxe couvrant la partie de lentille sphérique, de sorte que le faisceau de lumière incident sur l'élément de compensation d'aberration est divisé en un composant de lumière qui reçoit la fonction de compensation d'aberration selon le sens de polarisation du faisceau de lumière et un composant de lumière qui ne reçoit pas la fonction de compensation d'aberration et un rapport de ces composants peut être ajusté arbitrairement.

5. Unité de laser à hologramme selon la revendication 1, dans laquelle l'élément de compensation d'aberration est divisé en une pluralité de zones concentriques.

6. Unité de laser à hologramme selon la revendication 5, dans laquelle les zones concentriques de l'élément de compensation d'aberration sont au nombre de trois ou plus.

7. Unité de laser à hologramme selon la revendication 1, dans laquelle l'élément de compensation d'aberration est un hologramme présentant un motif concentrique.

8. Unité de laser à hologramme selon la revendication 7, dans laquelle l'hologramme est un hologramme de flamme.

9. Unité de laser à hologramme selon la revendication 1, dans laquelle l'élément de compensation d'aberration et l'élément formant hologramme faisant face à la source de lumière laser sont formés sur un même substrat.

10. Unité de laser à hologramme selon la revendication 1, dans laquelle l'élément de compensation d'aberration et l'élément formant hologramme faisant face à la source de lumière laser sont formés sur des substrats différents avec des marqueurs de positionnement formés dessus, et ensuite les substrats sont soudés ensemble pour former l'élément optique.

11. Capteur optique de type à deux focales comprenant :
un premier disque (9-1) présentant une première épaisseur (T1) et un premier indice de réfraction et un deuxième disque (9-2) présentant une deuxième épaisseur (T2) et un deuxième indice de réfraction ; et
une lentille d'objectif (8) conçue afin de faire converger un faisceau de lumière depuis une source de lumière (2) vers le premier disque et le deuxième disque.
dans lequel une unité de laser à hologramme (1) est utilisée comme source de lumière, l'unité de laser à hologramme (1) comprenant :
une source de lumière laser (2),
un capteur optique (3), et
un élément optique (4), l'élément optique étant disposé entre la source de lumière laser et la lentille d'objectif, dans lequel un élément formant hologramme à détection de signal (5) est formé sur une surface de l'élément optique faisant face à la source de lumière, et
dans lequel un élément de compensation d'aberration (6-1 à 6-8) est formé sur une surface de l'élément optique (4) faisant face à la lentille d'objectif (8), l'élément optique étant construit de sorte que le faisceau de lumière émis depuis la source de lumière laser et convergé par la lentille d'objectif sur le premier disque et sur le deuxième disque sans aberration est divisé en deux faisceaux de lumière.

12. Capteur optique de type à deux focales selon la revendication 11, dans lequel l'élément de compensation d'aberration est formé sur une partie d'une partie centrale de la surface de l'élément optique et présente une fonction de lentille sphérique.

13. Capteur optique de type à deux focales selon la revendication 12, dans lequel l'élément de compensation d'aberration comprend une partie de lentille sphérique et un matériau cristallin uniaxe recouvrant la partie de lentille sphérique, de sorte que le faisceau de lumière incident sur l'élément de compensation d'aberration est divisé en un composant de lumière qui reçoit la fonction de compensation d'aberration selon le sens de polarisation du faisceau de lumière et un composant de lumière qui ne reçoit pas une fonction de compensation d'aberration et un rapport de ces composants peut être ajusté arbitrairement.

14. Capteur optique de type à deux focales selon la revendication 13, dans lequel l'élément de compensation d'aberration présente une fonction de lentille concave lorsqu'une épaisseur optique du premier disque en raison du premier indice de réfraction est inférieure à une épaisseur optique du deuxième disque en raison du deuxième indice de réfraction, et comprend une fonction de lentille convexe lorsque l'épaisseur optique du premier disque en raison du premier indice de réfraction est supérieure à l'épaisseur optique du deuxième disque en raison du deuxième indice de réfraction.

15. Capteur optique avec deux mises au point selon la revendication 11, dans lequel une quantité de lumière d'un faisceau de lumière pour le premier disque est au moins deux fois plus importante que la quantité de lumière d'un faisceau de lumière pour le deuxième disque.
